Europäisches Patentamt

European Patent Office

Office européen des brevets

(19)

(11) EP 0 877 238 A1

(12) **EUROPÄISCHE PATENTANMELDUNG**

(43) Veröffentlichungstag:
11.11.1998 Patentblatt 1998/46

(51) Int. Cl.⁶: $G01K\ 1/02$

(21) Anmeldenummer: 98108179.7

(22) Anmeldetag: 05.05.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 09.05.1997 DE 29708372 U

(71) Anmelder:
SIEMENS AKTIENGESELLSCHAFT
80333 München (DE)

(72) Erfinder: Klumpp, Wolfgang
77855 Achern (DE)

(54) **Messanordnung mit mehreren Eingangskanälen**

(57)   Es wird eine Meßanordnung vorgeschlagen, die mit mehreren Eingangskanälen versehen ist, von denen mindestens ein Kanal zum Anschluß einer Dreileiterschaltung für Widerstandsthermometer mit einem Meßwiderstand (Rs) vorgesehen ist, und die ferner aufweist einen Multiplexer (1), der die Kanäle mit einer Meßwertverarbeitungs- und Meßwerterfassungseinheit (3) und mit einer Konstantstromquelle (2) verbindet. Durch geeignete Mittel werden durch Leitungswiderstände verursachte Meßfehler weitgehend vermieden.

Die Erfindung wird angewandt bei Analogeingabebaugruppen.

EP 0 877 238 A1

**Beschreibung**

Die Erfindung betrifft eine Meßanordnung mit mehreren Eingangskanälen gemäß dem Oberbegriff des Anspruchs 1.

Aus der Druckschrift „Elektronische Meßtechnik", 1990, Vogel-Fachbuch „Elektronik" 6, sind Dreileiterschaltungen als Meßschaltungen für Widerstandsthermometer bekannt, die vorzugsweise in einer Brückenschaltung betrieben werden. In diesen Brückenschaltungen sind dazu Meßleitungen einmal in der rechten und linken Hälfte angeordnet, wodurch sich die Leitungswiderstände kompensieren sollen. In einem praktischen Ausführungsbeispiel zeigt sich allerdings, daß die sehr langen Meßleitungen jedoch geringfügig unterschiedliche Widerstandswerte aufweisen, wodurch die Meßgenauigkeit beeinträchtigt wird. Im übrigen bewirken Temperaturschwankungen Meßfehler, da der Widerstand der gewöhnlich aus Kupfer bestehenden Meßleitungen sich mit der Temperatur ändert. In der deutschen Gebrauchsmusteranmeldung 297 05 598.4 wird eine Dreileiterschaltung für Widerstandsthermometer mit einem Meßwiderstand vorgeschlagen, dessen erster Anschluß über eine Versorgungsleitung an eine erste Konstantstromquelle anschließbar ist, die mit dem nichtinvertierenden Eingang eines Differenzverstärkers verbunden ist, dessen invertierender Eingang über eine Meßleitung an den zweiten Anschluß des Meßwiderstandes anschließbar ist. Durch Leitungswiderstände verursachte Meßfehler werden weitgehend dadurch vermieden, daß an den invertierenden Eingang des Differenzverstärkers eine zweite Konstantstromquelle angeschlossen ist, deren Strom mit dem Strom der ersten Konstantstromquelle übereinstimmt. Die vorgeschlagene Dreileiterschaltung ist nicht vorgesehen zum Anschluß an eine Meßanordnung, die mehrere Kanäle aufweist, an welche jeweils über einen Multiplexer eine Dreileiterschaltung anschließbar ist.

Der vorliegenden Erfindung liegt die Aufgabe zugrunde, eine Meßanordnung der eingangs genannten Art zu schaffen, in welcher durch Leitungswiderstände verursachte Meßfehler weitgehend vermieden werden.

Diese Aufgabe wird durch die im kennzeichnenden Teil des Anspruchs 1 angegebenen Maßnahmen gelöst.

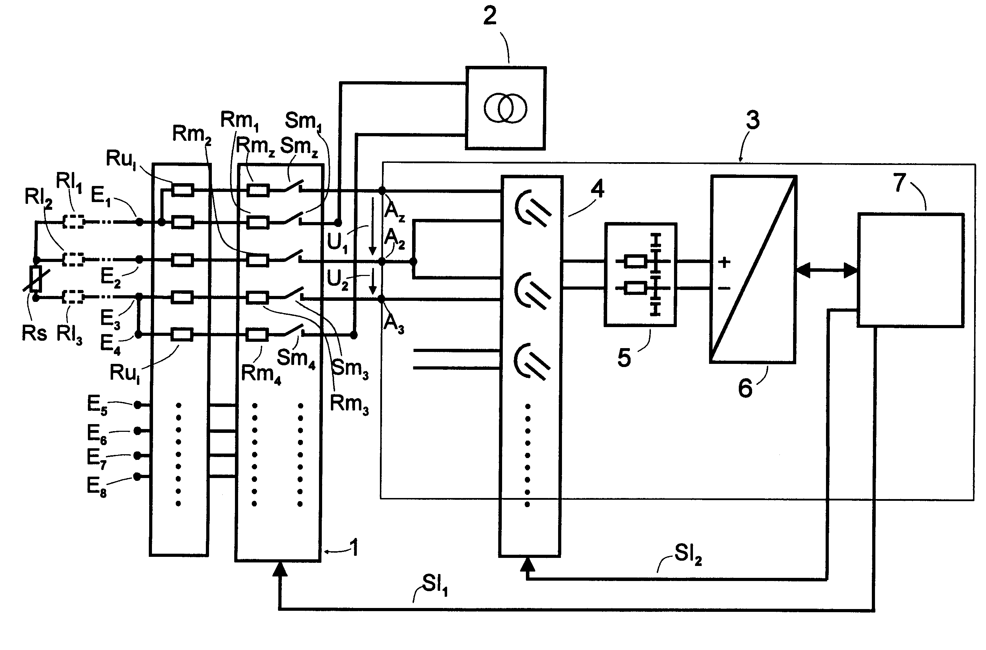

Die Erfindung wird nachfolgend anhand eines Ausführungsbeispiels unter Bezugnahme auf die einzige Figur der Zeichnung näher erläutert. Die Figur der Zeichnung zeigt eine Prinzipschaltung einer Meßanordnung mit mehreren Eingangskanälen, wobei an einem Kanal eine Dreileiterschaltung für Widerstandsthermometer mit einem Meßwiderstand angeschlossen ist.

Mit 1 ist ein mit Multiplexerwiderständen $Rm_i$, $i = 1$, 2 ... n, und Multiplexerschaltern $Sm_i$, $i = 1$, 2 ... n versehener Multiplexer bezeichnet, an dessen Anschlüsse $E_i$, $i = 1$, 2 ... n Meßschaltungen in Form von Zwei- und/oder Drei- und/oder Vierleiterschaltungen anschließbar sind. Im vorliegenden Beispiel ist lediglich eine Dreileiterschaltung für Widerstandsthermometer mit einem Meßwiderstand $Rs$ über Leitungen L1, L2, L3 an die Anschlüsse $E_1$, $E_2$, $E_3$ angeschlossen. Die Anschlüsse $E_1$, $E_2$, $E_3$ bilden zusammen mit einem Anschluß $E_4$ die Anschlüsse eines Kanals, wobei die Anschlüsse $E_3$, $E_4$ wegen des Dreileiterschaltungsbetriebs kurzgeschlossen sind. Ein weiterer Kanal umfaßt die Anschlüsse $E_5$, $E_6$, $E_7$, $E_8$, an welchen eine weitere Meßschaltung anschließbar ist. Weitere Kanäle sind zur besseren Übersicht und der Einfachheit halber nicht dargestellt. Es ist angenommen, daß die Leitungen L1, L2, L3 jeweils einen Leitungswiderstand aufweisen, was in der Zeichnung durch gestrichelt gezeichnete Widerstände $Rl_1$, $Rl_2$, $Rl_3$ dargestellt ist. Der Meßwiderstand $Rs$ kann z. B. ein Platinmeßfühler Pt 100 oder ein Nickelmeßfühler Ni 100 sein. Eine Konstantstromquelle 2 ist über den Multiplexerschalter $Sm_1$ und den Multiplexerwiderstand $Rm_1$ an den ersten Anschluß $E_1$ und über den Multiplexerschalter $Sm_4$ und den Multiplexerwiderstand $Rm_4$ an den dritten Anschluß $E_3$ angeschlossen und versorgt den Meßwiderstand $Rs$ mit einem Konstantstrom $Ic$. Um zu vermeiden, daß zu hohe Ströme über die Bauteile des Multiplexers 1 fließen, sind Schutzwiderstände $Ru_i$ vorgesehen, die den Multiplexerwiderständen $Rm_i$ vorgeschaltet sind. Eine Meßwertverarbeitungs- und Meßwerterfassungseinheit 3 umfaßt einen Demultiplexer 4, einen Filter 5, einen Analog-Digitalumsetzer 6 und einen Mikrocontroller 7. Weitere Bestandteile der Meßwertverarbeitungs- und Meßwerterfassungseinheit 3 sind zum Verständnis der Erfindung nicht von Bedeutung und werden daher im Ausführungsbeispiel nicht dargestellt und erläutert. Die Anschlüsse $E_1$, $E_2$, $E_3$ des Multiplexers 1 sind über die Multiplexerwiderstände $Rm_1$, $Rm_2$, $Rm_3$ und über Multiplexerschalter $Sm_1$, $Sm_2$, $Sm_3$ mit ersten, zweiten und dritten Anschlüssen $A_1$, $A_2$, $A_3$ der Meßwertverarbeitungs- und Meßwerterfassungseinheit 3 verbunden. Ferner ist der erste Anschluß des Multiplexers 1 über einen Multiplexerwiderstand $Rm_z$ und über einen weiteren Multiplexerschalter $Sm_z$ an einen weiteren Anschluß $A_z$ der Meßwertverarbeitungs- und Meßwerterfassungseinheit 3 angeschlossen. Der Mikrocontroller 7 steuert über Steuerleitungen $Sl_1$ und $Sl_2$ den Multiplexer 1 und den Demultiplexer 4 derart, daß die Spannungen $U_1$, $U_2$ zwischen den Anschlüssen $A_z$, $A_2$ und den Anschlüssen $A_2$, $A_3$ dem Analog-Digitalumsetzer 6 und schließlich in digitalisierter Form dem Mikrocontroller 7 selbst zugeführt werden. Dabei wird vorausgesetzt, daß diese Spannungen $U_1$, $U_2$ hochohmig erfaßt werden. Der Mikrocontroller 7 ermittelt die am Meßwiderstand $Rs$ abfallende Sensorspannung $U_s$ und somit einen dieser Spannung $U_s$ zugeordneten Meßwert in Form eines Temperaturwertes aus der Beziehung

$$U_s = U_2 - U_1,$$

wobei für den Fall einer hochohmigen Spannungserfassung gilt:

$$U_1 = Ic \cdot Rl_1 \text{ und}$$

$$U_2 = Ic \cdot (Rs + Rl_3).$$

Es kann vorausgesetzt werden, daß die Leitungswiderstände $Rl_1$ und $Rl_3$ ungefähr den gleichen Widerstandswert aufweisen, wodurch sich $U_s$ ergibt zu:

$$U_s = Ic \cdot Rs.$$

Leitungswiderstände, die den Meßwert verfälschen können, sind kompensiert.

**Patentansprüche**

1. Meßanordnung mit mehreren Eingangskanälen, von denen mindestens ein Kanal zum Anschluß einer Dreileiterschaltung für Widerstandsthermometer mit einem Meßwiderstand (Rs) vorgesehen ist, mit einem Multiplexer (1), der die Kanäle mit einer Meßwertverarbeitungs- und Meßwerterfassungseinheit (3) und mit einer Konstantstromquelle (2) verbindet, wobei

   - der Dreileiterschaltung ein Konstantstrom (Ic) über einen ersten Anschluß ($E_1$) des Kanals zuführbar ist,
   - an zweiten und dritten Anschlüssen ($E_2$, $E_3$) des Kanals der Meßwiderstand (Rs) anschließbar ist,
   - die ersten, zweiten und dritten Anschlüsse ($E_1$, $E_2$, $E_3$) des Kanals über Multiplexerwiderstände ($Rm_1$, $Rm_2$, $Rm_3$) und über Multiplexerschalter ($Sm_1$, $Sm_2$, $Sm_3$) mit ersten, zweiten und dritten Anschlüssen ($A_1$, $A_2$, $A_3$) der Meßwertverarbeitungs- und Meßwerterfassungseinheit (3) verbunden sind,
     **dadurch gekennzeichnet,**
   - daß der erste Anschluß ($E_1$) des Kanals über einen weiteren Multiplexerwiderstand ($Rm_z$) und über einen weiteren Multiplexerschalter ($Sm_z$) mit einem weiteren Anschluß ($A_z$) der Meßwertverarbeitungs- und Meßwerterfassungseinheit (3) verbunden ist,
   - daß die Meßwertverarbeitungs- und Meßwerterfassungseinheit (3) eine erste Spannung ($U_2$) zwischen deren zweiten und deren weiteren Anschluß ($A_2$, $A_z$) und eine zweite Spannung ($U_2$) zwischen deren zweiten und deren dritten Anschluß ($A_2$, $A_3$) hochohmig erfaßt und den Meßwert aus den Spannungen ($U_1$, $U_2$) ermittelt.

2. Meßanordnung nach Anspruch 1, **dadurch gekennzeichnet,** daß die Meßwertverarbeitungs- und Meßwerterfassungseinheit (3) Mittel (4, 5, 6, 7) aufweist, welche die erste und zweite Spannung ($U_2$, $U_1$) erfassen und den Meßwert durch Differenzbildung der Spannungen ($U_2$, $U_1$) ermitteln.

**Europäisches Patentamt**

**EUROPÄISCHER RECHERCHENBERICHT**

Nummer der Anmeldung

EP 98 10 8179

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 33 13 559 A (SIEMENS AG) 25. Oktober 1984 <br> * das ganze Dokument * <br> --- | 1,2 | G01K1/02 |
| X | CH 452 922 A (H. PILET E.A.) 31. Mai 1968 <br> * das ganze Dokument * <br> --- | 1,2 | |
| X | DE 27 46 360 A (MEGASYSTEMS INC) 19. April 1979 <br> * Seite 1 - Seite 13 * <br> --- | 1,2 | |
| X | EP 0 670 481 A (BECTON DICKINSON CO) 6. September 1995 <br> * Seite 6, Zeile 44 - Seite 7, Zeile 9; Abbildungen 3,4 * <br> --- | 1,2 | |
| X | W. CARIUS: <br> "VIELSTELLEN-TEMPERATURMESSSCHALTUNG MIT LINEARISIERUNG FUR PT 100-WIDERSTANDSTHERMOMETER" <br> TECHNISCHES MESSEN ATM., <br> Bd. 48, Nr. 4, April 1981, Seiten 127-130, XP002072888 <br> MUNCHEN   DE <br> * das ganze Dokument * <br> --- | 1,2 | RECHERCHIERTE SACHGEBIETE (Int.Cl.6) <br><br> G01K |
| X | C.H. FELLER: <br> "VIELSTELLEN-PRAZIONSTEMPERATURMESSSCHALTUNG MIT LINEARISIERUNG FUR PT 100-WIDERSTANDSTHERMOMETER" <br> TECHNISCHES MESSEN ATM., <br> Bd. 45, Nr. 3, März 1978, Seiten 89-93, XP002072889 <br> MUNCHEN   DE <br> * das ganze Dokument * <br> ----- | 1,2 | |

Der vorliegende Recherchenbericht wurde für alle Patentansprüche erstellt

| Recherchenort | Abschlußdatum der Recherche | Prüfer |
|---|---|---|
| DEN HAAG | 28. Juli 1998 | Ramboer, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03 82 (P04C03)

5